# EUROPEAN PATENT SPECIFICATION

(11) **EP 3 970 130 B1**
(45) Date of publication and mention of the grant of the patent: **14.10.2026**
(21) Application number: 20720440.5
(22) Date of filing: 20.04.2020
(51) Int. Cl.: G08G 1/16, G08G 1/01, B60W 30/095, B60W 40/09, B60W 40/04, B60W 60/00, B62D 15/02, B60W 50/00

(54) **DRIVING ASSISTANCE SYSTEM AND LANE CHANGE DETERMINING UNIT AND METHOD THEREOF**
FAHRASSISTENZSYSTEM UND SPURWECHSELBESTIMMUNGSEINHEIT UND VERFAHREN DAFÜR
SYSTÈME D'AIDE À LA CONDUITE ET UNITÉ DE DÉTERMINATION DE CHANGEMENT DE VOIE ET PROCÉDÉ ASSOCIÉ

(30) Priority: 17.05.2019 CN 201910413422
(43) Date of publication of application: 23.03.2022
(73) Proprietor: Robert Bosch GmbH, 70442 Stuttgart (DE)
(72) Inventor: SUN, Gao, Suzhou, Jiangsu 215021 (CN)
(86) International application number: PCT/EP2020/060986
(87) International publication number: WO 2020/233920

(56) References cited:
- EP-A1- 2 562 060
- EP-A1- 2 990 991
- US-A1- 2018 043 890
- US-B1- 10 037 699

## Description

### Technical field

The present application relates to the technical field of assisted driving, in particular to a driving assistance system and a lane change determining unit and lane change determining method thereof.

### Background art

As the motor vehicle industry rapidly develops, the use of driving assistance systems, which represent advanced motor vehicle technology, is becoming ever more widespread in vehicles. A driving assistance system uses various sensors mounted on a vehicle to sense travelling states of a principal vehicle and vehicles in the vicinity in the course of motor vehicle travel, and subjects the sensed data to mathematical operations and analysis in order to obtain information which is of help to driving, thereby realizing assisted driving.

An assisted driving system has numerous functions, and is capable of realizing assisted driving in many respects. The provision of lane change information of a target vehicle to the principal vehicle is a beneficial function, enabling the principal vehicle to execute an appropriate driving strategy in response to a lane change situation of the target vehicle.

In the prior art, driving situation information relating to a lane change of a target vehicle, detected by a sensor of the principal vehicle, is generally used to determine a lane change situation of the target vehicle; these items of driving situation information relating to a lane change include for example a transverse vehicle speed of the target vehicle, a position of the target vehicle in relation to a lane line, and a direction indicator lamp situation of the target vehicle. However, if the lane change situation of the target vehicle is determined solely on the basis of these items of driving situation information relating to a lane change, the problem of erroneous determination of the actual lane change situation will often arise. For example, due to driver inexperience, the target vehicle often sways transversely, but determination of the actual lane change situation will often arise. For example, due to driver inexperience, the target vehicle often sways transversely, but there is no intention to change lane. As another example, the target vehicle is customarily driven close to the lane line, but there is no intention to change lane. As another example, a left direction indicator lamp is activated on the target vehicle due to an erroneous operation, but there is no intention to change lane. Furthermore, the solution in the prior art also has the problem that lane change behaviour of the target vehicle cannot be determined in a timely manner. EP 2 990 991 A1 provides a method for assisting a driver of a vehicle by computationally predicting a future movement behavior of a target vehicle.

Thus, it is hoped that an improved technical solution can be provided to solve the abovementioned problems in the prior art.

### Summary of the invention

In view of the abovementioned problems in the prior art, the present application provides a technical solution for determining a lane change intention of a target vehicle, the solution being capable of providing lane change situation information with better accuracy and timeliness to a principal vehicle.

To this end, according to the present invention, a lane change determining unit for use in a driving assistance system of a principal vehicle is provided, as defined by independent claim 1. The lane change determining unit comprises: an acquisition module, configured to acquire information containing travelling states of the principal vehicle and vehicles in the vicinity thereof; a processing module, configured to determine a lane traffic efficiency of each lane on the basis of the information acquired by the acquisition module, the processing module being configured to calculate the traffic efficiency of each lane on the basis of a number of vehicles passing through each lane per unit time and/or an average speed of a vehicle flow in each lane, the processing module assessing a driving mood of a target vehicle from the vehicles in the vicinity of the principal vehicle on the basis of the acquired travelling states, and the processing module being further configured to determine a first lane change probability value of the target vehicle on the basis of the lane traffic efficiency and the driving mood of the target vehicle; and a generating module, configured to generate a lane change intention signal indicating a lane change intention of the target vehicle on the basis of the first lane change probability value, to assist the driving of the principal vehicle. The processing module is configured to: determine the first lane change probability value as indicating that the target vehicle has a lane change intention, when a traffic efficiency of a current lane of the target vehicle is lower than a traffic efficiency of a lane to which it might change and the driving mood of the target vehicle is confirmed as being radical, which indicates that a driver of the target vehicle wants to reach a destination quickly by constantly seeking and switching to a lane having higher traffic efficiency. The processing module is configured to assess the driving mood based on at least one of: a speed variance of the target vehicle, an acceleration of the target vehicle, a following distance of the target vehicle, and a lane change frequency of the target vehicle per unit time.

According to a feasible embodiment of the present application, the processing module calculates the number of vehicles passing through each lane per unit time and/or the average speed of the vehicle flow in each lane on the basis of the information acquired by the acquisition module; or the processing module determines the number of vehicles passing through each lane per unit time and/or the average speed of the vehicle flow in each lane on the basis of information acquired by the acquisition module from a cloud server.

According to a feasible embodiment of the present application, the processing module assesses the driving mood of the target vehicle in the following way: a transverse speed variance and a longitudinal speed variance of the target vehicle are calculated on the basis of the acquired travelling states; and the greater a transverse speed fluctuation characterized by the transverse speed variance of the target vehicle and the greater a longitudinal speed fluctuation characterized by the longitudinal speed variance, the more radical the driving mood of the target vehicle is assessed to be.

According to a feasible embodiment of the present application, the processing module assesses the driving mood of the target vehicle in the following way: an acceleration of the target vehicle is calculated on the basis of the acquired travelling states; and the more unstable the speed of the target vehicle is indicated to be by the acceleration thereof, the more radical the driving mood of the target vehicle is assessed to be.

According to a feasible embodiment of the present application, the processing module assesses the driving mood of the target vehicle in the following way: a following distance of the target vehicle is calculated on the basis of the acquired travelling states; a following distance variance is calculated on the basis of the following distance of the target vehicle within a period of time, and the greater a following distance fluctuation indicated by the following distance variance, the more radical the driving mood of the target vehicle is assessed to be; and/or a following distance minimum value is determined on the basis of the following distance of the target vehicle within a period of time, and the smaller the following distance minimum value, the more radical the driving mood of the target vehicle is assessed to be.

According to a feasible embodiment of the present application, the acquisition module is configured to acquire a lane change frequency of the target vehicle per unit time; and the processing module assesses the driving mood of the target vehicle in the following way: the more often that lane changes occur as indicated by the acquired lane change frequency of the target vehicle, the more radical the driving mood of the target vehicle is assessed to be.

According to a feasible embodiment of the present application, the traffic efficiency of the current lane of the target vehicle being lower than the traffic efficiency of the lane to which it might change means that: a vehicle speed offered to the target vehicle by the current lane thereof and calculated on the basis of the lane traffic efficiency is lower than a vehicle speed offered to the target vehicle by a lane to which it might change and calculated on the basis of the lane traffic efficiency.

According to a feasible embodiment of the present application, when the target vehicle is travelling in an adjacent lane, a vehicle having a vehicle speed less than or equal to that of the target vehicle is or will be in front of the target vehicle, a principal lane is able to offer to the target vehicle a travelling speed greater than a current vehicle speed thereof, and the driving mood of the target vehicle is determined as being radical, the lane change determining unit determines the lane change intention signal as indicating that the target vehicle has a lane change intention to cut into the principal lane from the adjacent lane.

According to a feasible embodiment of the present application, when the target vehicle is travelling in a principal lane, a vehicle having a vehicle speed less than or equal to that of the target vehicle is in front of the target vehicle, an adjacent lane is able to offer to the target vehicle a travelling speed greater than a current vehicle speed thereof, and the driving mood of the target vehicle is determined as being radical, the lane change determining unit determines the lane change intention signal as indicating that the target vehicle has a lane change intention to cut out of the principal lane to the adjacent lane.

According to a feasible embodiment of the present application, the acquisition module is configured to acquire a transverse speed of the target vehicle, position information in relation to a lane line, and direction indicator lamp information; the processing module is configured to calculate a second lane change probability value of the target vehicle on the basis of the acquired transverse speed of the target vehicle, position information in relation to the lane line, and direction indicator lamp information, and adjust the first lane change probability value on the basis of the second lane change probability value; the generating module is configured to generate the lane change intention signal indicating the lane change intention of the target vehicle on the basis of the adjusted first lane change probability value.

According to a feasible embodiment of the present application, the step of the processing module adjusting the first lane change probability value on the basis of the second lane change probability value comprises: increasing the first lane change probability value when the lane change intention indicated by the second lane change probability value is the same as the lane change intention indicated by the first lane change probability value; decreasing the first lane change probability value when the lane change intention indicated by the second lane change probability value is not the same as the lane change intention indicated by the first lane change probability value.

According to a feasible embodiment of the present application, the lane change determining unit transmits the lane change intention signal to a target selection unit of an ACC system of the principal vehicle, so that the ACC system re-selects a tracking object for the principal vehicle in response to the lane change intention signal.

According to another aspect of the present application, a lane change determining method for a driving assistance system is provided, as defined by independent claim 13.

According to another aspect of the present application, a driving assistance system is provided, as defined by dependent claim 14.

According to a feasible embodiment of the present application, the driving assistance system is configured to exchange information with the vehicles in the vicinity via the Internet of Vehicles; and/or the driving assistance system is configured to exchange information with a cloud server by wireless communication.

According to the technical solution of the present application, more accurate target vehicle lane change situation information can be provided to the principal vehicle, so as to assist the principal vehicle in determining an appropriate driving strategy. Moreover, according to the technical solution of the present application, target vehicle lane change situation information can be predicted more quickly, so as to enable the ACC system of the principal vehicle to switch the tracking target in response to the information in a more timely manner, thereby avoiding uncomfortable travelling caused by the ACC system selecting the wrong tracking object.

### Brief description of the drawings

The features, characteristics, advantages and benefits of the present invention will become obvious through the following detailed description in conjunction with the drawings.
Fig. 1 shows a schematic block diagram of a driving assistance system according to a feasible embodiment of the present application.
Fig. 2 shows a schematic block diagram of a lane change determining unit of the driving assistance system in fig. 1.
Figs. 3A - 3C show some embodiments of a target vehicle cutting into a principal lane from an adjacent lane.
Figs. 4A - 4C show some embodiments of a target vehicle cutting out of a principal lane to an adjacent lane.
Fig. 5 shows a flow chart of a lane change determining method for a driving assistance system according to a feasible embodiment of the present application.

### Particular embodiments

Some feasible embodiments of the present application are described below in conjunction with the drawings.

The present application relates generally to an assisted driving technology, used for providing lane change situation information of a target vehicle to a principal vehicle.

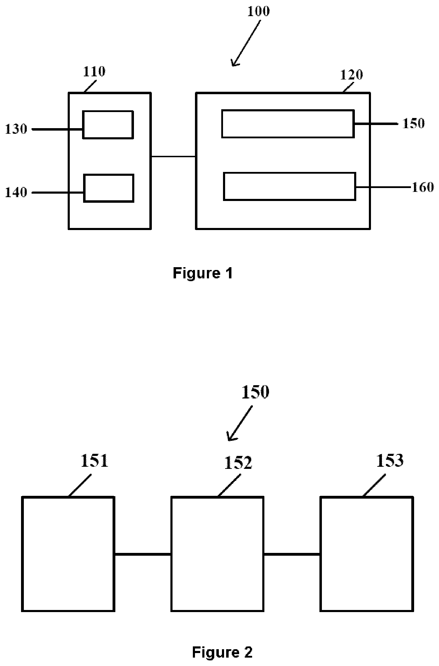

Fig. 1 shows schematically a driving assistance system 100 according to a feasible embodiment of the present application. The driving assistance system 100 is disposed on a vehicle, and comprises a measuring apparatus 110 and a decision making apparatus 120.

In this embodiment, the measuring apparatus 110 is used for measuring travelling states of the principal vehicle and vehicles in the vicinity. The measuring apparatus 110 may comprise a radar device 130 and a camera device 140. The radar device 130 is used for detecting positions and travelling speeds (including longitudinal speeds and transverse speeds) of vehicles in the vicinity. The camera device 140 is used for capturing vehicle travelling state information and lane traffic flow information. For example, the camera device 140 captures an image containing position information of a target vehicle in relation to a lane line and direction indicator lamp information of the target vehicle. The measuring apparatus 110 may also comprise a sensor of the principal vehicle, for measuring the travelling state of the principal vehicle.

In this embodiment, the decision making apparatus 120 is in communicative connection with the measuring apparatus 110 via a bus, in order to perform information exchange therebetween. The decision making apparatus 120 is used for providing, to the principal vehicle, decision making information which is of help to assisted driving. The decision making apparatus 120 comprises a lane change determining unit 150 and a tracking target selection unit 160.

The lane change determining unit 150 is used for determining, on the basis of information measured by the measuring apparatus 110, lane change situation information of the target vehicle, which is used to indicate a lane change intention of the target vehicle.

The tracking target selection unit 160 is connected to the lane change determining unit 150, and is used for selecting a tracking object for the principal vehicle, in order to control a vehicle speed of the principal vehicle. The tracking target selection unit 160 is for example determined by a perception system of the principal vehicle. The tracking target selection unit 160 is for example a target selection unit, used to determine a tracking target for the principal vehicle, of an adaptive cruise control (ACC) system of the principal vehicle. The tracking target selection unit 160 switches the tracking object for the principal vehicle, in response to lane change situation information of the target vehicle received from the lane change determining unit 150. For example, when the lane change situation information indicates that the target vehicle will cut into a principal lane or cut into the principal lane from a current lane thereof, the ACC system can switch the tracking object for the principal vehicle in a timely manner on the basis of the information.

It should be understood that the driving assistance system 100 according to the present application can exchange information with vehicles in the vicinity via the Internet of Vehicles; that is to say, the driving assistance system 100 of the principal vehicle can acquire data information measured by other vehicles via the Internet of Vehicles, for use in lane change determination. The driving assistance system 100 according to the present application can communicate with a cloud server wirelessly; that is to say, the driving assistance system 100 of the principal vehicle can acquire data information from the cloud server via a communication interface of the principal vehicle, for use in lane change determination.

As can be seen, the technical solution according to the present application can quickly and accurately determine lane change situation information of the target vehicle for the principal vehicle. Moreover, the ACC system of the principal vehicle can re-select the tracking object for the principal vehicle in a timely manner on the basis of the lane change situation information, thereby avoiding an uncomfortable travelling experience caused by the ACC system incorrectly selecting the tracking target as a result of not having obtained lane change information in a timely manner.

Fig. 2 shows schematically the lane change determining unit 150 in fig. 1 according to a feasible embodiment of the present application; the lane change determining unit comprises an acquisition module 151, a processing module 152 and a generating module 153. These modules of the lane change determining unit 150, and operating processes thereof, are described below.

The acquisition module 151 is used for acquiring information containing driving states of the principal vehicle and vehicles in the vicinity, to be provided to the processing module 152 to undergo analytical computation. The acquisition module 151 may acquire information from the measuring apparatus 110 of the principal vehicle. For example, the acquisition module 151 acquires positions and vehicle speeds (including transverse vehicle speeds and longitudinal vehicle speeds) of vehicles in the vicinity from the radar device 130. The acquisition module 151 acquires an image, containing driving state information of the principal vehicle and vehicles in the vicinity and lane traffic flow information, from the camera device 140. The acquisition module 151 may also acquire these items of information from vehicles in the vicinity via the Internet of Vehicles. For example, the acquisition module 151 of the principal vehicle acquires, via the Internet of Vehicles, information measured by a measuring apparatus of a vehicle in the vicinity. The acquisition module 151 may also acquire these items of information from a cloud server by wireless communication.

The processing module 152 is in communicative connection with the acquisition module 151, and used for subjecting data information acquired by the acquisition module 151 to analytical processing, in order to obtain a traffic efficiency of each lane and a driving mood of the target vehicle, and thereby determine the lane change intention of the target vehicle.

In some embodiments, the processing module 152 may calculate the traffic efficiency of each lane on the basis of the number of vehicles passing through each lane per unit time. The processing module 152 may also calculate the traffic efficiency of each lane on the basis of the average speed of a vehicle flow in each lane. The processing module 152 may also calculate the traffic efficiency of each lane on the basis of two parameters, specifically the number of vehicles in each lane and the average speed of the vehicle flow in each lane. For example, the processing module 152 uses a mathematical model to perform data fusion, and thereby calculates the traffic efficiency of each lane.

In some embodiments, the processing module 152 determines two parameters, specifically the number of vehicles in each lane and the average speed of the vehicle flow in each lane, on the basis of data information acquired from the cloud server by the acquisition module 151; for example, the processing module 152 seeks out the two parameters from information acquired by the cloud server, and does not need to perform calculation.

The processing module 152 determines the driving mood of the target vehicle on the basis of information acquired by the acquisition module 151. In the present application, the driving mood may be understood to be the degree of radicalness in the manner of driving of the driver of the vehicle. For example, a radical driving mood indicates that the driver of the vehicle always wants to reach a destination quickly by constantly seeking and switching to a lane having higher traffic efficiency. A gentle (non-radical) driving mood indicates that the driver of the vehicle can accept relatively stable travel in the current lane to reach a destination slowly. In other words, the more agitated the driving mood of the target vehicle, the stronger the lane change intention of the target vehicle.

In some embodiments, the processing module 152 may calculate a speed variance of the target vehicle on the basis of acquired speed information of a vehicle in the vicinity, and assess the driving mood of the target vehicle on the basis of the speed variance of the target vehicle. For example, the processing module 152 may calculate a transverse speed variance and a longitudinal speed variance of the target vehicle on the basis of acquired speed information. The transverse speed variance characterizes transverse speed fluctuation of the vehicle; the longitudinal speed variance of the vehicle characterizes longitudinal speed fluctuation of the vehicle. The greater the transverse fluctuation characterized by the transverse speed variance of the target vehicle, and the greater the longitudinal fluctuation characterized by the longitudinal speed variance of the target vehicle, the more radical the driving mood of the target vehicle is assessed to be by the processing module 152.

In some embodiments, the processing module 152 may calculate an acceleration of the target vehicle on the basis of acquired speed information, and assess the driving mood of the target vehicle according to the acceleration of the target vehicle. The acceleration of the vehicle can characterize whether the vehicle speed is stable. For example, the more unstable (e.g. sometimes accelerating and sometimes decelerating) the vehicle speed of the target vehicle is indicated to be by the acceleration of the target vehicle, the more radical the driving mood of the target vehicle is assessed to be by the processing module 152.

In some embodiments, the processing module 152 may calculate a following distance of the target vehicle on the basis of acquired position information, and assess the driving mood of the target vehicle according to the following distance of the target vehicle. For example, the processing module 152 may calculate the variance of following distance on the basis of the following distance of the target vehicle within a period of time. The variance of following distance characterizes fluctuation of following distance. The greater the following distance fluctuation characterized by the following distance variance of the target vehicle, the more radical the driving mood of the target vehicle is assessed to be by the processing module 152. The processing module 152 may also determine a minimum following distance on the basis of the following distance of the target vehicle within a period of time, and assess the driving mood of the target vehicle on the basis of the minimum following distance. The smaller the minimum following distance of the target vehicle within a period of time, the more radical the driving mood of the target vehicle is assessed to be by the processing module 152. The processing module 152 may also determine the driving mood of the target vehicle on the basis of two parameters, specifically the following distance variance and the minimum following distance; for example, the processing module 152 uses a mathematical model to perform data fusion, and thereby calculates the driving mood of the target vehicle.

In some embodiments, the processing module 152 may assess the driving mood of the target vehicle according to a lane change frequency of the target vehicle per unit time. The lane change frequency of the target vehicle may be measured by means of a sensor of the principal vehicle, or may be captured by means of a camera device above a transportation road and transmitted to an assisted driving system of the principal vehicle, or may be obtained from the cloud server. The more often the target vehicle changes lane as characterized by the lane change frequency of the target vehicle per unit time, the more radical the driving mood of the target vehicle is assessed to be by the processing module 152.

In some embodiments, the processing module 152 may determine the driving mood of the target vehicle on the basis of one or more of the speed variance, acceleration, following distance and lane change frequency of the target vehicle as described above; for example, the processing module 152 uses a mathematical model to perform data fusion, and thereby calculates the driving mood of the target vehicle.

It should be understood that the processing module 152 may use a degree-indicative value to indicate the driving mood of the target vehicle; the value is for example a probability value or scoring value. That is to say, in the abovementioned implementation, the processing module 152 assesses (determines) the driving mood of the target vehicle to be a degree-indicative value.

It should be understood that only some embodiments of the determination of the driving mood of the target vehicle are described above; the driving mood of the target vehicle could also be assessed in other ways, with no restriction to those set out here.

When the lane traffic efficiency and the target vehicle driving mood have been determined, the lane change determining unit 150 determines a lane change probability value of the target vehicle on the basis of the lane traffic efficiency and the target vehicle driving mood, to characterize the lane change intention of the target vehicle.

Based on the lane traffic efficiency, a vehicle speed which the lane is able to offer to a vehicle travelling thereon can be determined. For example, if a vehicle speed offered to the target vehicle by the current lane thereof and calculated on the basis of the lane traffic efficiency is lower than a vehicle speed offered to the target vehicle by a lane to which it might change and calculated on the basis of the lane traffic efficiency, then it is determined that the traffic efficiency of the current lane of the target vehicle is lower than the traffic efficiency of the lane to which it might change. When the traffic efficiency of the lane in which the target vehicle is located is lower than the traffic efficiency of the lane to which it might change, and the driving mood of the target vehicle is confirmed as being radical, a first lane change probability value is determined to indicate that the target vehicle has a strong lane change intention.

In one case, the target vehicle is travelling in an adjacent lane adjoining the principal lane, and a vehicle having a vehicle speed less than or equal to that of the target vehicle is or will be in front of the target vehicle (e.g. will cut into the lane); the principal lane is able to offer to the target vehicle a travelling speed that is greater than the current vehicle speed thereof, and if the driving mood of the target vehicle is determined as being radical, the lane change determining unit 150 generates a lane change intention signal indicating that the target vehicle has a strong lane change intention to cut into the principal lane from the adjacent lane. Some practical instances in which the target vehicle might cut into the principal lane are set out below in conjunction with the drawings.

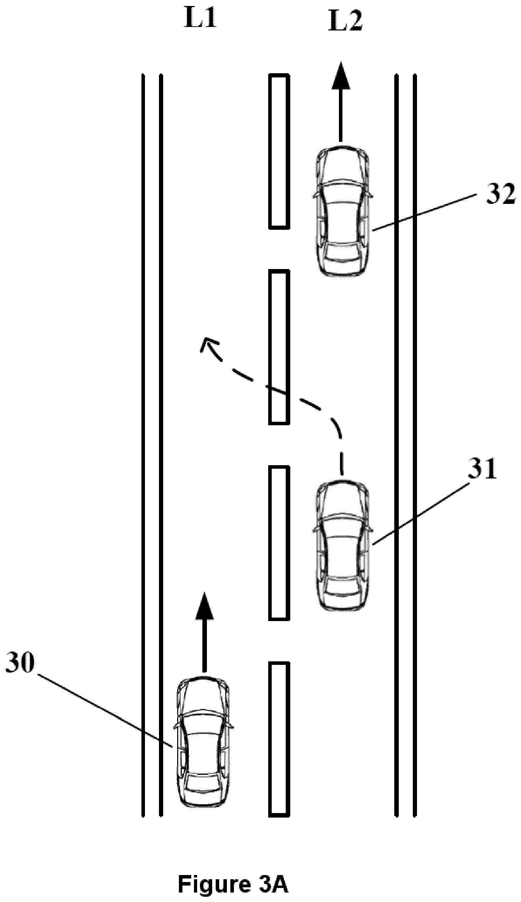

Figs. 3A - 3C show practical instances of the target vehicle cutting into the principal lane, taking two lanes as an example (a principal lane L1 and an adjacent lane L2, with a target vehicle 31 travelling on the adjacent lane L2).

As shown in fig. 3A, the target vehicle 31 is travelling in the adjacent lane L2, with a vehicle speed of 90 km/h. A vehicle 32, with a vehicle speed of 80 km/h which is lower than that of the target vehicle, is in the adjacent lane in front of the target vehicle 31. A principal vehicle 30 has a vehicle speed of 80 km/h in the principal lane L1. At this time, if the driving mood of the target vehicle 31 is determined as being radical, the target vehicle 31 is highly likely to cut into the principal lane L1 from the adjacent lane L2, i.e. the target vehicle 31 has a strong lane change intention to cut into the principal lane L1.

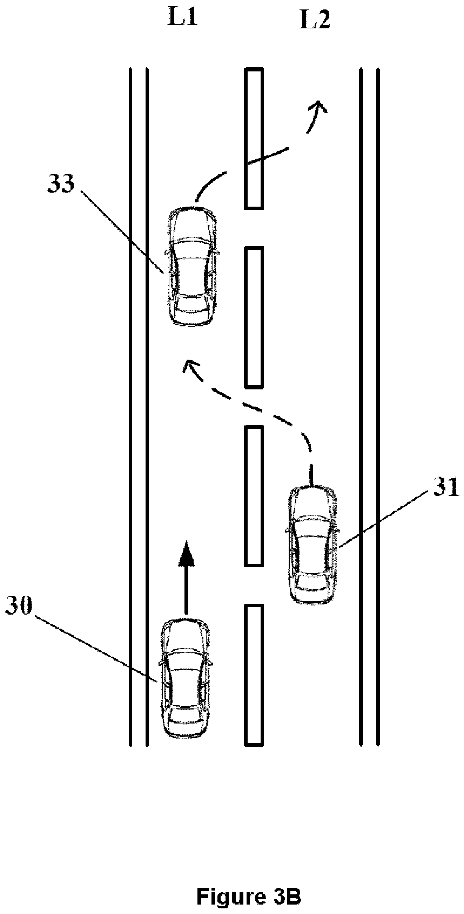

As shown in fig. 3B, the target vehicle 31 is travelling in the adjacent lane L2, with a vehicle speed of 70 km/h. A vehicle 33 with a vehicle speed of 60 km/h in the principal lane is about to cut into the adjacent lane from the principal lane, i.e. the vehicle 33 with a lower vehicle speed than the target vehicle is about to cut into a frontward region of the lane in which the target vehicle is travelling, and this will force the target vehicle to decelerate. The vehicle speed of the principal vehicle in the principal lane is 70 km/h. At this time, if the driving mood of the target vehicle is determined as being radical, the target vehicle 31 is highly likely to cut into the principal lane L1 from the adjacent lane L2, i.e. the target vehicle 31 has a strong lane change intention to cut into the principal lane L1.

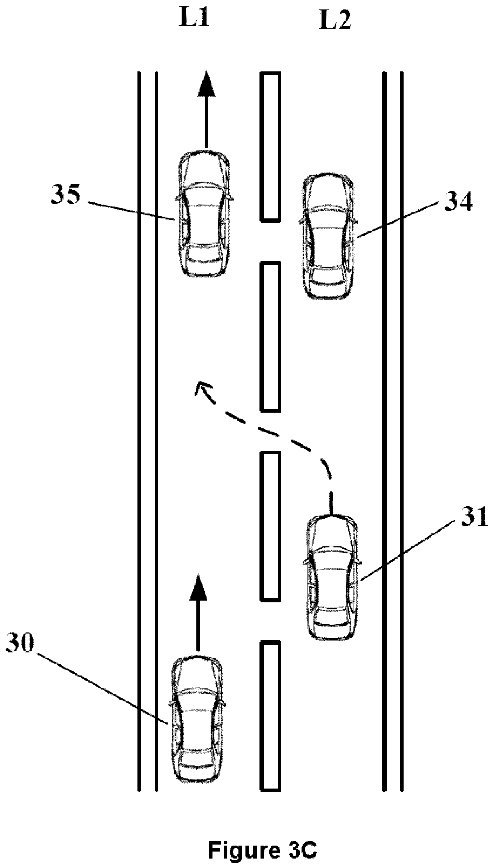

As shown in fig. 3C, the target vehicle 31 is travelling in the adjacent lane L2, with a vehicle speed of 65 km/h. A vehicle 34, with a vehicle speed of 60 km/h which is lower than that of the target vehicle, is in the adjacent lane in front of the target vehicle 31. The principal vehicle has a vehicle speed of 60 km/h in the principal lane. A vehicle 35, with a vehicle speed greater than that of the target vehicle, is in the principal lane in a position in front of and to one side of the target vehicle. That is to say, even if the target vehicle 31 cuts into the principal lane L1 and a vehicle is travelling in front of the target vehicle after the target vehicle cuts in, the principal lane will be able to offer a vehicle speed greater than the current vehicle speed thereof. At this time, if the driving mood of the target vehicle 31 is determined as being radical, the target vehicle 31 is highly likely to cut into the principal lane L1 from the adjacent lane L2, i.e. the target vehicle 31 will have a strong lane change intention to cut into the principal lane.

In another case, the target vehicle is travelling in the principal lane, and a vehicle having a vehicle speed less than or equal to that of the target vehicle is in front of the target vehicle; an adjacent lane is able to offer to the target vehicle a travelling speed that is greater than the current vehicle speed thereof, and if the driving mood of the target vehicle is determined as being radical, the lane change determining unit 150 generates a lane change intention signal indicating that the target vehicle has a strong lane change intention to cut out of the principal lane to the adjacent lane. Some practical instances in which the target vehicle might cut out of the principal lane are set out below in conjunction with the drawings.

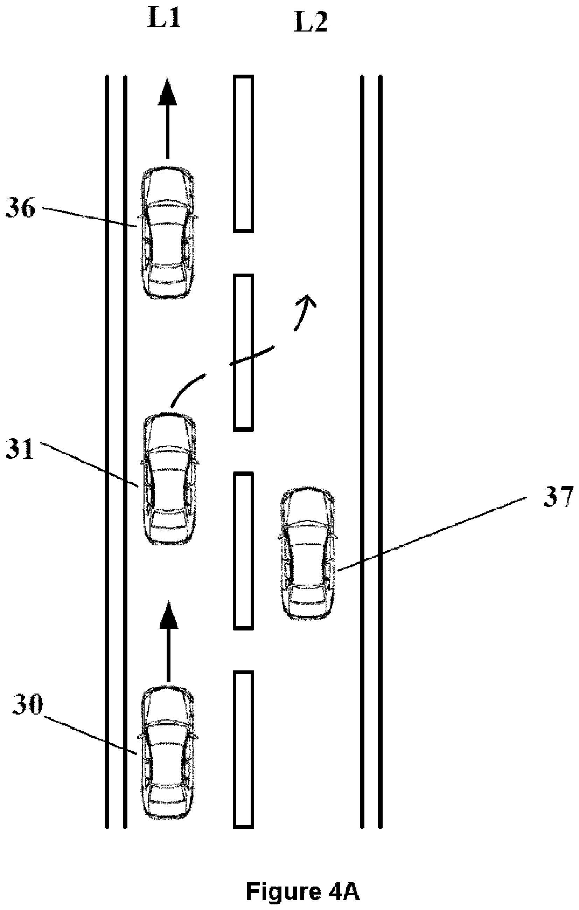

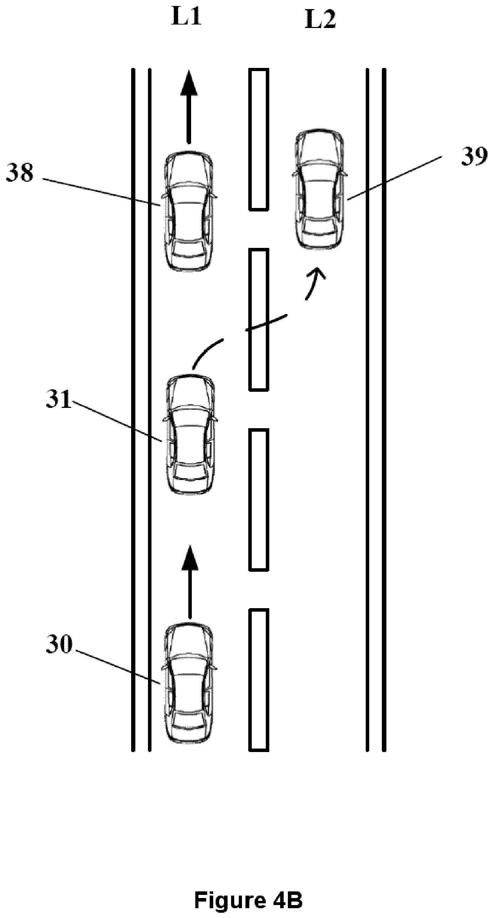

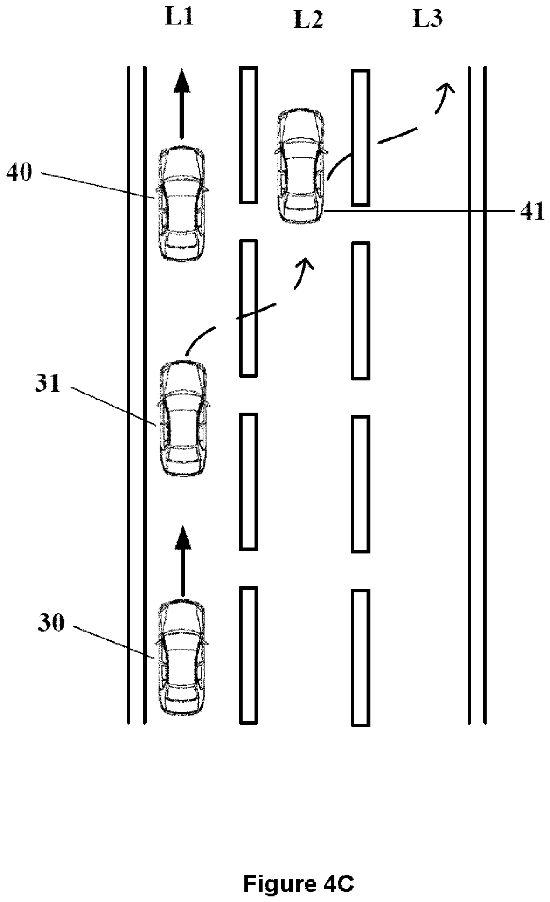

Figs. 4A and 4B show two lanes, i.e. the principal lane L1 and adjacent lane L2. Fig. 4C shows three lanes, i.e. the principal lane L1 and adjacent lanes L2 and L3. The target vehicle 31 is travelling on the principal lane L1.

As shown in fig. 4A, the target vehicle 31 is travelling in the principal lane L1, with a vehicle speed of 70 km/h. A vehicle 36, with a vehicle speed of 70 km/h which is equal to that of the target vehicle, is in the principal lane in front of the target vehicle 31. The principal vehicle has a vehicle speed of 70 km/h in the principal lane. A vehicle 37 with a vehicle speed of 60 km/h (lower than that of the target vehicle) is in the adjacent lane L2, behind and to one side of the target vehicle. That is to say, if the target vehicle cuts into the adjacent lane L2, it will be able to travel at a speed higher than the current vehicle speed. At this time, if the driving mood of the target vehicle 31 is determined as being radical, the target vehicle 31 is highly likely to cut out of the principal lane to the adjacent lane, i.e. the target vehicle 31 has a strong lane change intention to cut out of the principal lane.

As shown in fig. 4B, the target vehicle 31 is travelling in the principal lane L1, with a vehicle speed of 65 km/h. A vehicle 38, with a vehicle speed of 60 km/h which is lower than that of the target vehicle 31, is in the principal lane in front of the target vehicle 31. The principal vehicle 30 has a vehicle speed of 60 km/h in the principal lane. A vehicle 39 with a vehicle speed of 60 km/h - 80 km/h is in the adjacent lane L2, in front of and to one side of the target vehicle 31. That is to say, if the target vehicle 31 cuts into the adjacent lane L2, it will be able to travel at a speed higher than the current vehicle speed. At this time, if the driving mood of the target vehicle 31 is determined as being radical, the target vehicle 31 is highly likely to cut out of the principal lane to the adjacent lane, i.e. the target vehicle 31 has a strong lane change intention to cut out of the principal lane.

As shown in fig. 4C, the target vehicle 31 is travelling in the principal lane L1, with a vehicle speed of 65 km/h. A vehicle 40, with a vehicle speed of 65 km/h which is equal to that of the target vehicle, is in the principal lane in front of the target vehicle 31. The principal vehicle has a vehicle speed of 60 km/h in the principal lane L1. A vehicle 41 with a vehicle speed of 60 km/h is in the adjacent lane L2, in front of and to one side of the target vehicle 31, and the vehicle 41 is about to cut out of the current lane L2 thereof to lane L3 which adjoins the current lane thereof. That is to say, if the target vehicle 31 cuts into the adjacent lane L2, it will be able to travel at a speed higher than the current vehicle speed. At this time, if the driving mood of the target vehicle 31 is determined as being radical, the target vehicle 31 is highly likely to cut out of the principal lane to the adjacent lane, i.e. the target vehicle 31 has a strong lane change intention to cut out of the principal lane.

According to another manner of implementation of this manner of implementation, the lane change determining unit 150 determines the lane change intention of the target vehicle on the basis of a greater amount of information, and thereby provides a more accurate target vehicle lane change intention signal.

In this manner of implementation, the acquisition module 151 acquires the transverse speed of the target vehicle, position information in relation to a lane line, and direction indicator lamp information. The processing module 152 calculates a second lane change probability value of the target vehicle on the basis of these items of acquired information, and combines this with the first lane change probability value determined in the manner described above to determine the lane change intention of the target vehicle. For example, if the lane change intentions characterized by the calculated second lane change probability value and first lane change probability value are the same, the first lane change probability value is adjusted to a larger value than that determined previously. Conversely, if the lane change intentions characterized by the calculated second lane change probability value and first lane change probability value are not the same, the first lane change probability value is adjusted to a smaller value than that determined previously.

The generating module 153 generates a lane change intention signal indicating the lane change intention of the target vehicle on the basis of the first lane change probability value; the lane change intention signal for example comprises a lane change probability value and a lane change direction.

In some embodiments, the lane change determining unit 150 transmits the generated lane change intention signal to the ACC system of the principal vehicle, so that the target selection unit of the ACC system of the principal vehicle re-selects the tracking target on the basis of the signal. Thus, when it is determined that the target vehicle cuts into the principal lane or cuts out of the principal lane, the ACC system can execute a corresponding response in a timely manner, thereby avoiding the problem of uncomfortable driving or inappropriate deceleration caused by the ACC system selecting the wrong tracking object as a result of not being able to obtain lane change information in a timely manner.

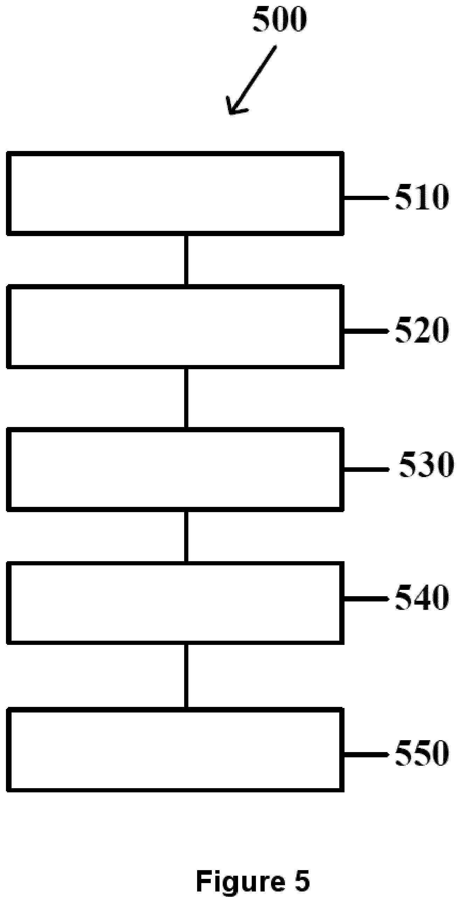

Fig. 5 shows a lane change determining method 500 for use in the driving assistance system 100 according to a feasible embodiment of the present invention. Optionally, the lane change determining method 500 is implemented by the lane change determining unit 150 described above. However, it must be pointed out that the principles of the present application are not limited to a lane change determining unit of a specific type and structure.

As shown in fig. 5, in step 510, information containing travelling states of the principal vehicle and a vehicle in the vicinity thereof is acquired. In step 520, the lane traffic efficiency of each lane is determined on the basis of the acquired information. In step 530, the driving mood of the target vehicle is calculated on the basis of the acquired travelling states of vehicles in the vicinity. In step 540, the first lane change probability value of the target vehicle is determined on the basis of the lane traffic efficiency and the driving mood of the target vehicle. In step 550, the lane change intention signal indicating the lane change intention of the target vehicle is generated on the basis of the first lane change probability value, to assist the driving of the principal vehicle.

It should be understood that the operating process of the lane change determining unit 150 is likewise suitable for the method 500. Thus, the various relevant features described above in relation to the lane change determining unit 150 are likewise applicable here.

A machine-readable storage medium having an executable instruction stored thereon is also provided according to an embodiment of the present invention, wherein the executable instruction, when executed, causes a machine to perform the method 500.

Although some embodiments have been described above, these embodiments are merely set out for demonstrative purposes, and are not intended to limit the scope of the present invention. The scope of protection is defined by the appended claims.

## Claims

1. Lane change determining unit (150) for use in a driving assistance system (100) of a principal vehicle, comprising:
an acquisition module (151), configured to acquire information containing travelling states of the principal vehicle and vehicles in the vicinity thereof;
a processing module (152), configured to determine a lane traffic efficiency of each lane on the basis of the information acquired by the acquisition module (151), the processing module (152) being configured to calculate the traffic efficiency of each lane on the basis of a number of vehicles passing through each lane per unit time and/or an average speed of a vehicle flow in each lane, the processing module (152) assessing a driving mood of a target vehicle from the vehicles in the vicinity of the principal vehicle on the basis of the acquired travelling states, and the processing module (152) being further configured to determine a first lane change probability value of the target vehicle on the basis of the lane traffic efficiency and the driving mood of the target vehicle; and
a generating module (153), configured to generate a lane change intention signal indicating a lane change intention of the target vehicle on the basis of the first lane change probability value, to assist the driving of the principal vehicle,
wherein the processing module (152) is configured to:
determine the first lane change probability value as indicating that the target vehicle has a lane change intention, when a traffic efficiency of a current lane of the target vehicle is lower than a traffic efficiency of a lane to which it might change and the driving mood of the target vehicle is confirmed as being radical, which indicates that a driver of the target vehicle wants to reach a destination quickly by constantly seeking and switching to a lane having higher traffic efficiency, and
wherein the processing module (152) is configured to assess the driving mood based on at least one of: a speed variance of the target vehicle, an acceleration of the target vehicle, a following distance of the target vehicle, and a lane change frequency of the target vehicle per unit time.

2. Lane change determining unit (150) according to Claim 1, wherein
the processing module (152) calculates the number of vehicles passing through each lane per unit time and/or the average speed of the vehicle flow in each lane on the basis of the information acquired by the acquisition module; or the processing module determines the number of vehicles passing through each lane per unit time and/or the average speed of the vehicle flow in each lane on the basis of information acquired by the acquisition module from a cloud server.

3. Lane change determining unit (150) according to Claim 1 or 2, wherein the processing module (152) assesses the driving mood of the target vehicle in the following way:
a transverse speed variance and a longitudinal speed variance of the target vehicle are calculated on the basis of the acquired travelling states; and
the greater a transverse speed fluctuation **characterized by** the transverse speed variance of the target vehicle and the greater a longitudinal speed fluctuation **characterized by** the longitudinal speed variance, the more radical the driving mood of the target vehicle is assessed to be.

4. Lane change determining unit (150) according to any one of Claims 1 - 3, wherein the processing module (152) assesses the driving mood of the target vehicle in the following way:
an acceleration of the target vehicle is calculated on the basis of the acquired travelling states; and
the more unstable the speed of the target vehicle is indicated to be by the acceleration thereof, the more radical the driving mood of the target vehicle is assessed to be.

5. Lane change determining unit (150) according to any one of Claims 1 - 4, wherein the processing module (152) assesses the driving mood of the target vehicle in the following way:
a following distance of the target vehicle is calculated on the basis of the acquired travelling states;
a following distance variance is calculated on the basis of the following distance of the target vehicle within a period of time, and the greater a following distance fluctuation indicated by the following distance variance, the more radical the driving mood of the target vehicle is assessed to be; and/or
a following distance minimum value is determined on the basis of the following distance of the target vehicle within a period of time, and the smaller the following distance minimum value, the more radical the driving mood of the target vehicle is assessed to be.

6. Lane change determining unit (150) according to any one of Claims 1 - 5, wherein
the acquisition module (151) is configured to acquire a lane change frequency of the target vehicle per unit time; and
the processing module (152) assesses the driving mood of the target vehicle in the following way:
the more often that lane changes occur as indicated by the acquired lane change frequency of the target vehicle, the more radical the driving mood of the target vehicle is assessed to be.

7. Lane change determining unit (150) according to any one of Claims 1 - 6,
wherein the traffic efficiency of the current lane of the target vehicle being lower than the traffic efficiency of the lane to which it might change means that: a vehicle speed offered to the target vehicle by the current lane thereof and calculated on the basis of the lane traffic efficiency is lower than a vehicle speed offered to the target vehicle by a lane to which it might change and calculated on the basis of the lane traffic efficiency.

8. Lane change determining unit (150) according to Claim 7, wherein
when the target vehicle is travelling in an adjacent lane, a vehicle having a vehicle speed less than or equal to that of the target vehicle is or will be in front of the target vehicle, a principal lane is able to offer to the target vehicle a travelling speed greater than a current vehicle speed thereof, and the driving mood of the target vehicle is determined as being radical, the lane change determining unit determines the lane change intention signal as indicating that the target vehicle has a lane change intention to cut into the principal lane from the adjacent lane.

9. Lane change determining unit (150) according to Claim 7, wherein
when the target vehicle is travelling in a principal lane, a vehicle having a vehicle speed less than or equal to that of the target vehicle is in front of the target vehicle, an adjacent lane is able to offer to the target vehicle a travelling speed greater than a current vehicle speed thereof, and the driving mood of the target vehicle is determined as being radical, the lane change determining unit determines the lane change intention signal as indicating that the target vehicle has a lane change intention to cut out of the principal lane to the adjacent lane.

10. Lane change determining unit (150) according to any one of Claims 1 - 9, wherein
the acquisition module (151) is configured to acquire a transverse speed of the target vehicle, position information in relation to a lane line, and direction indicator lamp information;
the processing module (152) is configured to calculate a second lane change probability value of the target vehicle on the basis of the acquired transverse speed of the target vehicle, position information in relation to the lane line, and direction indicator lamp information, and adjust the first lane change probability value on the basis of the second lane change probability value;
the generating module (153) is configured to generate the lane change intention signal indicating the lane change intention of the target vehicle on the basis of the adjusted first lane change probability value.

11. Lane change determining unit (150) according to Claim 10, wherein the step of the processing module (152) adjusting the first lane change probability value on the basis of the second lane change probability value comprises:
increasing the first lane change probability value when the lane change intention indicated by the second lane change probability value is the same as the lane change intention indicated by the first lane change probability value;
decreasing the first lane change probability value when the lane change intention indicated by the second lane change probability value is not the same as the lane change intention indicated by the first lane change probability value.

12. Lane change determining unit (150) according to any one of Claims 1 - 11, wherein the lane change determining unit (150) transmits the lane change intention signal to a target selection unit of an ACC system of the principal vehicle (30), so that the ACC system re-selects a tracking object for the principal vehicle (30) in response to the lane change intention signal.

13. Lane change determining method for a driving assistance system, implemented by means of the lane change determining unit (150) according to any one of Claims 1 - 12.

14. Driving assistance system (100), comprising:
a measuring apparatus (110), for measuring information containing travelling states of a principal vehicle (30) and vehicles in the vicinity thereof;
a decision making apparatus (120), connected to the measuring apparatus (110) and comprising the lane change determining unit (150) according to any one of Claims 1 - 12, the decision making apparatus (120) being configured to provide decision making information for assisted driving to the principal vehicle by means of the lane change determining unit (150).

15. Driving assistance system (100) according to Claim 14, wherein
the driving assistance system (100) is configured to exchange information with the vehicles in the vicinity via the Internet of Vehicles; and/or
the driving assistance system (100) is configured to exchange information with a cloud server by wireless communication.

## Patentansprüche

1. Spurwechselbestimmungseinheit (150) zur Verwendung in einem Fahrassistenzsystem (100) eines Hauptfahrzeugs, die Folgendes umfasst:
ein Erfassungsmodul (151), das dazu ausgelegt ist, Informationen zu erfassen, die Fahrzustände des Hauptfahrzeugs und von Fahrzeugen in dessen Nähe enthalten;
ein Verarbeitungsmodul (152), das dazu ausgelegt ist, eine Spurverkehrseffizienz jeder Fahrspur auf Grundlage der durch das Erfassungsmodul (151) erfassten Informationen zu bestimmen, wobei das Verarbeitungsmodul (152) dazu ausgelegt ist, die Verkehrseffizienz jeder Fahrspur auf Grundlage einer Anzahl von Fahrzeugen, die jede Fahrspur pro Zeiteinheit befahren, und/oder einer durchschnittlichen Geschwindigkeit eines Fahrzeugflusses in jeder Fahrspur zu berechnen,
wobei das Verarbeitungsmodul (152) eine Fahrstimmung eines Zielfahrzeugs von den Fahrzeugen in der Nähe des Hauptfahrzeugs auf Grundlage der erfassten Fahrzustände beurteilt und das Verarbeitungsmodul (152) ferner dazu ausgelegt ist, einen ersten Spurwechselwahrscheinlichkeitswert des Zielfahrzeugs auf Grundlage der Spurverkehrseffizienz und der Fahrstimmung des Zielfahrzeugs zu bestimmen; und
ein Erzeugungsmodul (153), das dazu ausgelegt ist, ein Spurwechselabsichtssignal zu erzeugen, das eine Spurwechselabsicht des Zielfahrzeugs auf Grundlage des aersten Spurwechselwahrscheinlichkeitswerts angibt, um das Fahren des Hauptfahrzeugs zu unterstützen, wobei das Verarbeitungsmodul (152) ausgelegt ist zum:
Bestimmen des ersten Spurwechselwahrscheinlichkeitswerts, der angibt, dass das Zielfahrzeug eine Spurwechselabsicht hat, wenn eine Verkehrseffizienz einer aktuellen Fahrspur des Zielfahrzeugs niedriger als eine Verkehrseffizienz einer Fahrspur ist, in die es wechseln könnte, und die Fahrstimmung des Zielfahrzeugs als radikal bestätigt wird, was anzeigt, dass ein Fahrer des Zielfahrzeugs schnell ein Ziel erreichen will, indem er ständig eine Fahrspur mit höherer Verkehrseffizienz sucht und auf diese wechselt, und
wobei das Verarbeitungsmodul (152) dazu ausgelegt ist, die Fahrstimmung auf Grundlage von einem aus Folgendem zu beurteilen: einer Geschwindigkeitsvarianz des Zielfahrzeugs, einer Beschleunigung des Zielfahrzeugs, einem Folgeabstand des Zielfahrzeugs und einer Spurwechselhäufigkeit des Zielfahrzeugs pro Zeiteinheit.

2. Spurwechselbestimmungseinheit (150) nach Anspruch 1, wobei
das Verarbeitungsmodul (152) die Anzahl von Fahrzeugen, die jede Fahrspur pro Zeiteinheit befahren, und/oder die durchschnittliche Geschwindigkeit des Fahrzeugflusses in jeder Fahrspur auf Grundlage der durch das Erfassungsmodul erfassten Informationen berechnet; oder das Verarbeitungsmodul die Anzahl von Fahrzeugen, die jede Fahrspur pro Zeiteinheit befahren, und/oder die durchschnittliche Geschwindigkeit des Fahrzeugflusses in jeder Fahrspur auf Grundlage von Informationen bestimmt, die durch das Erfassungsmodul von einem Cloud-Server erfasst werden.

3. Spurwechselbestimmungseinheit (150) nach Anspruch 1 oder 2, wobei das Verarbeitungsmodul (152) die Fahrstimmung des Zielfahrzeugs auf die folgende Weise beurteilt:
eine Quergeschwindigkeitsvarianz und eine Längsgeschwindigkeitsvarianz des Zielfahrzeugs werden auf Grundlage der erfassten Fahrzustände berechnet; und
je größer eine durch die Quergeschwindigkeitsvarianz des Zielfahrzeugs charakterisierte Quergeschwindigkeitsschwankung und je größer eine durch die Längsgeschwindigkeitsvarianz charakterisierte Längsgeschwindigkeitsschwankung ist, desto radikaler wird die Fahrstimmung des Zielfahrzeugs beurteilt.

4. Spurwechselbestimmungseinheit (150) nach einem der Ansprüche 1-3, wobei das Verarbeitungsmodul (152) die Fahrstimmung des Zielfahrzeugs auf die folgende Weise beurteilt:
eine Beschleunigung des Zielfahrzeugs wird auf Grundlage der erfassten Fahrzustände berechnet; und
je instabiler die Geschwindigkeit des Zielfahrzeugs anhand von dessen Beschleunigung angezeigt wird, desto radikaler wird die Fahrstimmung des Zielfahrzeugs beurteilt.

5. Spurwechselbestimmungseinheit (150) nach einem der Ansprüche 1-4, wobei das Verarbeitungsmodul (152) die Fahrstimmung des Zielfahrzeugs auf die folgende Weise beurteilt:
ein Folgeabstand des Zielfahrzeugs wird auf Grundlage der erfassten Fahrzustände berechnet;
eine Folgeabstandsvarianz wird auf Grundlage des Folgeabstands des Zielfahrzeugs innerhalb einer Zeitspanne berechnet, und je größer eine Folgeabstandsschwankung ist, die durch die Folgeabstandsvarianz angezeigt wird, desto radikaler wird die Fahrstimmung des Zielfahrzeugs beurteilt; und/oder
ein Folgeabstandsminimalwert wird auf Grundlage der Folgeabstands des Zielfahrzeugs innerhalb einer Zeitspanne bestimmt, und je kleiner der Folgeabstandsminimalwert ist, desto radikaler wird die Fahrstimmung des Zielfahrzeugs beurteilt.

6. Spurwechselbestimmungseinheit (150) nach einem der Ansprüche 1-5, wobei
das Erfassungsmodul (151) dazu ausgelegt ist, eine Spurwechselhäufigkeit des Zielfahrzeugs pro Zeiteinheit zu erfassen; und
das Verarbeitungsmodul (152) die Fahrstimmung des Zielfahrzeugs auf folgende Weise beurteilt: je öfter Spurwechsel auftreten, wie durch die erfasste Spurwechselhäufigkeit des Zielfahrzeugs angegeben, desto radikaler wird die Fahrstimmung des Zielfahrzeugs beurteilt.

7. Spurwechselbestimmungseinheit (150) nach einem der Ansprüche 1-6,
wobei, dass die Verkehrseffizienz der aktuellen Fahrspur des Zielfahrzeugs niedriger als die Verkehrseffizienz der Fahrspur ist, auf die es wechseln könnte, Folgendes bedeutet: eine Fahrzeuggeschwindigkeit, die dem Zielfahrzeug durch die aktuelle Fahrspur davon angeboten und auf Grundlage der Spurverkehrseffizienz berechnet wird, ist niedriger als eine Fahrzeuggeschwindigkeit, die dem Zielfahrzeug durch eine Fahrspur angeboten wird, auf die es wechseln könnte, und die auf Grundlage der Spurverkehrseffizienz berechnet wird.

8. Spurwechselbestimmungseinheit (150) nach Anspruch 7, wobei
wenn das Zielfahrzeug in einer angrenzenden Fahrspur fährt, sich ein Fahrzeug mit einer Fahrzeuggeschwindigkeit, die kleiner oder gleich der des Zielfahrzeugs ist, vor dem Zielfahrzeug befindet oder befinden wird, eine Hauptfahrspur dem Zielfahrzeug eine Fahrgeschwindigkeit anbieten kann, die größer als eine aktuelle Fahrzeuggeschwindigkeit davon ist, und die Fahrstimmung des Zielfahrzeugs als radikal bestimmt wird, die Spurwechselbestimmungseinheit das Spurwechselabsichtssignal als Hinweis darauf bestimmt, dass das Zielfahrzeug eine Spurwechselabsicht hat, um aus der angrenzenden Fahrspur in die Hauptfahrspur zu schneiden.

9. Spurwechselbestimmungseinheit (150) nach Anspruch 7, wobei
wenn das Zielfahrzeug in einer Hauptfahrspur fährt, sich ein Fahrzeug mit einer Fahrzeuggeschwindigkeit, die kleiner oder gleich der des Zielfahrzeugs ist, vor dem Zielfahrzeug befindet, eine angrenzende Fahrspur dem Zielfahrzeug eine Fahrgeschwindigkeit anbieten kann, die größer als eine aktuelle Fahrzeuggeschwindigkeit davon ist, und die Fahrstimmung des Zielfahrzeugs als radikal bestimmt wird, die Spurwechselbestimmungseinheit das Spurwechselabsichtssignal als Hinweis darauf bestimmt, dass das Zielfahrzeug eine Spurwechselabsicht hat, um aus der Hauptfahrspur in die angrenzende Fahrspur zu schneiden.

10. Spurwechselbestimmungseinheit (150) nach einem der Ansprüche 1-9, wobei
das Erfassungsmodul (151) dazu ausgelegt ist, eine Quergeschwindigkeit des Zielfahrzeugs, Positionsinformationen in Bezug auf eine Fahrspurlinie und Fahrtrichtungsanzeigeleuchteninformationen zu erfassen;
das Verarbeitungsmodul (152) dazu ausgelegt ist, einen zweiten Spurwechselwahrscheinlichkeitswert des Zielfahrzeugs auf Grundlage der erfassten Quergeschwindigkeit des Zielfahrzeugs, Positionsinformationen in Bezug auf die Fahrspurlinie und Fahrtrichtungsanzeigeleuchteninformationen zu berechnen und den ersten Spurwechselwahrscheinlichkeitswert auf Grundlage des zweiten Spurwechselwahrscheinlichkeitswerts anzupassen;
das Erzeugungsmodul (153) dazu ausgelegt ist, das Spurwechselabsichtssignal, das die Spurwechselabsicht des Zielfahrzeugs angibt, auf Grundlage des angepassten ersten Spurwechselwahrscheinlichkeitswerts zu erzeugen.

11. Spurwechselbestimmungseinheit (150) nach Anspruch 10, wobei der Schritt des Anpassens des ersten Spurwechselwahrscheinlichkeitswerts durch das Verarbeitungsmodul (152) auf Grundlage des zweiten Spurwechselwahrscheinlichkeitswerts Folgendes umfasst:
Erhöhen des ersten Spurwechselwahrscheinlichkeitswerts, wenn die durch den zweiten Spurwechselwahrscheinlichkeitswert angegebene Spurwechselabsicht gleich der durch den ersten Spurwechselwahrscheinlichkeitswert angegebenen Spurwechselabsicht ist;
Verringern des ersten Spurwechselwahrscheinlichkeitswerts, wenn die durch den zweiten Spurwechselwahrscheinlichkeitswert angegebene Spurwechselabsicht nicht die gleiche ist wie die durch den ersten Spurwechselwahrscheinlichkeitswert angegebene Spurwechselabsicht.

12. Spurwechselbestimmungseinheit (150) nach einem der Ansprüche 1-11, wobei die Spurwechselbestimmungseinheit (150) das Spurwechselabsichtssignal an eine Zielauswahleinheit eines ACC-Systems des Hauptfahrzeugs (30) überträgt, so dass das ACC-System ein Verfolgungsobjekt für das Hauptfahrzeug (30) als Reaktion auf das Spurwechselabsichtssignal erneut auswählt.

13. Spurwechselbestimmungsverfahren für ein Fahrassistenzsystem, implementiert mittels der Spurwechselbestimmungseinheit (150) nach einem der Ansprüche 1 - 12.

14. Fahrassistenzsystem (100), umfassend:
eine Messeinrichtung (110) zum Messen von Informationen, die Fahrzustände eines Hauptfahrzeugs (30) und von Fahrzeugen in dessen Nähe enthalten;
eine Entscheidungsfindungseinrichtung (120), die mit der Messeinrichtung (110) verbunden ist und die Spurwechselbestimmungseinheit (150) nach einem der Ansprüche 1 - 12 umfasst, wobei die Entscheidungsfindungseinrichtung (120) dazu ausgelegt ist, Entscheidungsfindungsinformationen zum unterstützten Fahren mittels der Spurwechselbestimmungseinheit (150) für das Hauptfahrzeug bereitzustellen.

15. Fahrassistenzsystem (100) nach Anspruch 14, wobei
das Fahrassistenzsystem (100) dazu ausgelegt ist, Informationen mit den Fahrzeugen in der Umgebung über das Internet von Fahrzeugen auszutauschen; und/oder
das Fahrassistenzsystem (100) dazu ausgelegt ist, durch drahtlose Kommunikation Informationen mit einem Cloud-Server auszutauschen.

## Revendications

1. Unité de détermination de changement de voie (150) destinée à être utilisée dans un système d'aide à la conduite (100) d'un véhicule principal, comprenant :
un module d'acquisition (151), configuré pour acquérir des informations contenant des états de déplacement du véhicule principal et des véhicules dans le voisinage de celui-ci ;
un module de traitement (152), configuré pour déterminer une efficacité de circulation de voie de chaque voie sur la base des informations acquises par le module d'acquisition (151), le module de traitement (152) étant configuré pour calculer l'efficacité de circulation de chaque voie sur la base d'un nombre de véhicules traversant chaque voie par temps unitaire et/ou d'une vitesse moyenne d'un flux de véhicules dans chaque voie, le module de traitement (152) évaluant un mode de conduite d'un véhicule cible à partir des véhicules dans le voisinage du véhicule principal sur la base des états de déplacement acquis, et le module de traitement (152) étant en outre configuré pour déterminer une première valeur de probabilité de changement de voie du véhicule cible sur la base de l'efficacité de circulation de voie et du mode de conduite du véhicule cible ; et
un module de génération (153), configuré pour générer un signal d'intention de changement de voie indiquant une intention de changement de voie du véhicule cible sur la base de la première valeur de probabilité de changement de voie, pour aider la conduite du véhicule principal,
dans laquelle le module de traitement (152) est configuré pour :
déterminer que la première valeur de probabilité de changement de voie indique que le véhicule cible a une intention de changement de voie, lorsqu'une efficacité de circulation d'une voie actuelle du véhicule cible est inférieure à une efficacité de circulation d'une voie à laquelle il pourrait passer et il est confirmé que le mode de conduite du véhicule cible est radical, ce qui indique qu'un conducteur du véhicule cible veut atteindre une destination plus rapidement en recherchant constamment une voie ayant une efficacité de circulation plus élevée, et en passant constamment à celle-ci, et
dans laquelle le module de traitement (152) est configuré pour évaluer le mode de conduite sur la base d'au moins une parmi : une variance de vitesse du véhicule cible, une accélération du véhicule cible, une distance de suivi du véhicule cible, et une fréquence de changement de voie du véhicule cible par temps unitaire.

2. Unité de détermination de changement de voie (150) selon la revendication 1, dans laquelle le module de traitement (152) calcule le nombre de véhicules traversant chaque voie par temps unitaire et/ou la vitesse moyenne du flux de véhicules dans chaque voie sur la base des informations acquises par le module d'acquisition ; ou le module de traitement détermine le nombre de véhicules traversant chaque voie par temps unitaire et/ou la vitesse moyenne du flux de véhicules dans chaque voie sur la base d'informations acquises par le module d'acquisition en provenance d'un serveur en nuage.

3. Unité de détermination de changement de voie (150) selon la revendication 1 ou 2, dans laquelle le module de traitement (152) évalue le mode de conduite du véhicule cible de la manière suivante :
une variance de vitesse transversale et une variance de vitesse longitudinale du véhicule cible sont calculées sur la base des états de déplacement acquis ; et
plus une fluctuation de vitesse transversale **caractérisée par** la variance de vitesse transversale du véhicule cible est importante et plus une fluctuation de vitesse longitudinale **caractérisée par** la variance de vitesse longitudinale est importante, plus il est évalué que le mode de conduite du véhicule cible est radical.

4. Unité de détermination de changement de voie (150) selon l'une quelconque des revendications 1 à 3, dans laquelle le module de traitement (152) évalue le mode de conduite du véhicule cible de la manière suivante :
une accélération du véhicule cible est calculée sur la base des états de déplacement acquis ; et
plus il est indiqué que la vitesse du véhicule cible est instable par l'accélération de celui-ci, plus il est évalué que le mode de conduite du véhicule cible est radical.

5. Unité de détermination de changement de voie (150) selon l'une quelconque des revendications 1 à 4, dans laquelle le module de traitement (152) évalue le mode de conduite du véhicule cible de la manière suivante :
une distance de suivi du véhicule cible est calculée sur la base des états de déplacement acquis ;
une variance de distance de suivi est calculée sur la base de la distance de suivi du véhicule cible dans les limites d'un laps de temps, et plus une fluctuation distance de suivi indiquée par la variance de distance de suivi est importante, plus il est évalué que le mode de conduite du véhicule cible est radical ; et/ou
une valeur minimum de distance de suivi est déterminée sur la base de la distance de suivi du véhicule cible dans les limites d'un laps de temps, et plus la valeur minimum de distance de suivi est petite, plus il est évalué que le mode de conduite du véhicule cible est radical.

6. Unité de détermination de changement de voie (150) selon l'une quelconque des revendications 1 à 5, dans laquelle
le module d'acquisition (151) est configuré pour acquérir une fréquence de changement de voie du véhicule cible par temps unitaire ; et
le module de traitement (152) évalue le mode de conduite du véhicule cible de la manière suivante : plus des changements de voie, tels qu'indiqués par la fréquence de changement de voie acquise du véhicule cible, se produisent souvent, plus il est évalué que le mode de conduite du véhicule cible est radical.

7. Unité de détermination de changement de voie (150) selon l'une quelconque des revendications 1 à 6,
dans laquelle l'efficacité de circulation de la voie actuelle du véhicule cible étant inférieure à l'efficacité de circulation de la voie à laquelle il pourrait passer signifie que : une vitesse de véhicule offerte au véhicule cible par la voie actuelle de celui-ci et calculée sur la base de l'efficacité de circulation de voie est inférieure à une vitesse de véhicule offerte au véhicule cible par une voie à laquelle il pourrait passer et calculée sur la base de l'efficacité de circulation de voie.

8. Unité de détermination de changement de voie (150) selon la revendication 7, dans laquelle lorsque le véhicule cible se déplace dans une voie adjacente, un véhicule ayant une vitesse de véhicule inférieure ou égale à celle du véhicule cible est ou sera devant le véhicule cible, une voie principale est capable d'offrir au véhicule cible une vitesse de déplacement supérieure à une vitesse de véhicule actuelle de celui-ci, et il est déterminé que le mode de conduite du véhicule cible est radical, l'unité de détermination de changement de voie détermine que le signal d'intention de changement de voie indique que le véhicule cible a une intention de changement de voie pour entrer dans la voie principale à partir de la voie adjacente.

9. Unité de détermination de changement de voie (150) selon la revendication 7, dans laquelle lorsque le véhicule cible se déplace dans une voie principale, un véhicule ayant une vitesse de véhicule inférieure ou égale à celle du véhicule cible est devant le véhicule cible, une voie adjacente est capable d'offrir au véhicule cible une vitesse de déplacement supérieure à une vitesse de véhicule actuelle de celui-ci, et il est déterminé que le mode de conduite du véhicule cible est radical, l'unité de détermination de changement de voie détermine que le signal d'intention de changement de voie indique que le véhicule cible a une intention de changement de voie pour sortir de la voie principale pour passer à la voie adjacente.

10. Unité de détermination de changement de voie (150) selon l'une quelconque des revendications 1 à 9, dans laquelle
le module d'acquisition (151) est configuré pour acquérir une vitesse transversale du véhicule cible, des informations de position relativement à une ligne de voie, et des informations de feu indicateur de direction ;
le module de traitement (152) est configuré pour calculer une seconde valeur de probabilité de changement de voie du véhicule cible sur la base de la vitesse transversale du véhicule cible, des informations de position relativement à la ligne de voie, et des informations de feu indicateur de direction acquises, et ajuster la première valeur de probabilité de changement de voie sur la base de la seconde valeur de probabilité de changement de voie ;
le module de génération (153) est configuré pour générer le signal d'intention de changement de voie indiquant l'intention de changement de voie du véhicule cible sur la base de la première valeur de probabilité de changement de voie ajustée.

11. Unité de détermination de changement de voie (150) selon la revendication 10, dans laquelle l'étape du module de traitement (152) consistant à ajuster la première valeur de probabilité de changement de voie sur la base de la seconde valeur de probabilité de changement de voie comprend :
augmenter la première valeur de probabilité de changement de voie lorsque l'intention de changement de voie indiquée par la seconde valeur de probabilité de changement de voie est la même que l'intention de changement de voie indiquée par la première valeur de probabilité de changement de voie ;
réduire la première valeur de probabilité de changement de voie lorsque l'intention de changement de voie indiquée par la seconde valeur de probabilité de changement de voie n'est pas la même que l'intention de changement de voie indiquée par la première valeur de probabilité de changement de voie.

12. Unité de détermination de changement de voie (150) selon l'une quelconque des revendications 1 à 11, dans laquelle l'unité de détermination de changement de voie (150) transmet le signal d'intention de changement de voie à une unité de sélection de cible d'un système ACC du véhicule principal (30), de telle sorte que le système ACC resélectionne un objet à suivre pour le véhicule principal (30) en réponse au signal d'intention de changement de voie.

13. Procédé de détermination de changement de voie pour un système d'aide à la conduite, mis en œuvre au moyen de l'unité de détermination de changement de voie (150) selon l'une quelconque des revendications 1 à 12.

14. Système d'aide à la conduite (100), comprenant :
un appareil de mesure (110), destiné à mesurer des informations contenant des états de déplacement d'un véhicule principal (30) et de véhicules dans le voisinage de celui-ci ;
un appareil de prise de décision (120), connecté à l'appareil de mesure (110) et comprenant l'unité de détermination de changement de voie (150) selon l'une quelconque des revendications 1 à 12, l'appareil de prise de décision (120) étant configuré pour fournir des informations de prise de décision pour la conduite aidée au véhicule principal au moyen de l'unité de détermination de changement de voie (150).

15. Système d'aide à la conduite (100) selon la revendication 14, dans lequel
le système d'aide à la conduite (100) est configuré pour échanger des informations avec les véhicules dans le voisinage par l'intermédiaire de l'Internet des Véhicules ; et/ou
le système d'aide à la conduite (100) est configuré pour échanger des informations avec un serveur en nuage par communication sans fil.
